# EUROPEAN PATENT APPLICATION

(11) **EP 4 465 153 A1**
(43) Date of publication of application: **20.11.2024**
(21) Application number: 24175052.0
(22) Date of filing: 09.05.2024
(51) Int. Cl.: G06F 3/01, G06F 3/04817, G06F 3/0482, G06F 3/04842

(54) **USER INTERFACE PROVIDING APPARATUS, METHOD FOR PROVIDING USER INTERFACE, AND USER INTERFACE PROVIDING PROGRAM**

(30) Priority: 19.05.2023 JP 2023082644
(71) Applicant: Sharp Kabushiki Kaisha, Sakai-ku Sakai-shi, Osaka 590-8522 (JP)
(72) Inventor: DAIOKU, Shuji, Sakai City, 590-8522 (JP)
(74) Representative: Treeby, Philip David William

(57) **Abstract**

A user interface providing apparatus, includes an icon display unit configured to cause a display, included in a head-mounted device, to display an icon, and to move the icon in accordance with a motion of a head detected by a sensor included in the head-mounted device; and a processing executing unit configured to execute processing in accordance with the icon when the icon is kept displayed in a set region over a set time period.

## Description

### CROSS-REFERENCE TO RELATED APPLICATION

The present application claims priority from Japanese Application JP 2023-082644, the content of which is hereby incorporated by reference into this application.

### BACKGROUND OF THE INVENTION

### Field of the Invention

### Technical Field

The present disclosure relates to a user interface providing apparatus, a method for providing a user interface, and a user interface providing program.

### Background Art

Japanese Unexamined Patent Application Publication No. 2022-185235 discloses a communications system. In using the communications system, augmented reality (AR) eye-glasses are mounted on a user's head. A motion controller is held in the user's hands. A smart device obtains a motion of the user's hands in accordance with a result detected by an acceleration sensor and transmitted from the motion controller. (See paragraphs [0017] - [0019].)

Methods for operating a cross-reality (XR) device represented by the AR eye-glasses disclosed in Japanese Unexamined Patent Application Publication No. 2022-185235 typically include four kinds of operation methods: an operation method using a hand-held controller; an operation method using a smartphone controller; an operation method carried out by hand tracking; and an operation method using an operating member of a main body.

In the operation method using the hand-held controller, the hand-held controller held in the user's hands emits an imaginary beam, and when the beam hits an icon, the icon is selected. When the user presses a button provided to the hand-held controller, the selection of the icon is accepted.

In the operation method using the smartphone controller, a smartphone held in the user's hands emits an imaginary beam, and when the beam hits an icon, the icon is selected. When the user presses a button provided to the smartphone, the selection of the icon is accepted.

In the operation method by hand tracking, a camera included in the XR device recognizes the shapes of the user's hands, and the XR device displays hands whose shapes correspond to the shapes of the recognized hands. When the displayed hand touches an icon, the selection of the icon is accepted.

In the operation method using the operating member of the main body, the user operates the operating member provided to the XR device, such as a button and a touch pad. In accordance with the operation, a cursor moves, and the selection of an icon is confirmed.

If the operation method using either a hand-held controller or a smartphone controller is employed, the controller occupies the user's hands. Hence, when the operation method using either a hand-held controller or a smartphone controller is employed, the XR device has limited applications if used outdoors.

If the operation method carried out by hand tracking is employed, the user has to hold his or her hands in front of his or her eyes and move the hands for the operation. Such a motion makes people around the user feel awkward.

If the operation method using a button of the main body is employed, the user has to perform an operation on the operating member of the main body. Hence, the user has to touch the XR device. When the user touches the XR device, the XR device vibrates and the video image shakes.

An aspect of the present disclosure is devised in view of the above problems. An aspect of the present disclosure sets out to provide a user interface providing apparatus, a method for providing a user interface, and a user interface providing program that allow a hands-free operation on a head-mounted device without giving an awkward impression to people around the user.

A user interface providing apparatus according to an aspect of the present disclosure includes: an icon display unit that causes a display, included in a head-mounted device, to display an icon, and moves the icon in accordance with a motion of a head detected by a sensor included in the head-mounted device; and a processing executing unit that executes processing in accordance with the icon when the icon is kept displayed in a set region over a set time period.

### BRIEF DESCRIPTION OF THE DRAWINGS

FIG. 1 is a front view schematically illustrating a user interface providing system of a first embodiment, and a user wearing augmented reality (AR) eye-glasses included in the user interface providing system;
FIG. 2 is a block diagram illustrating the user interface providing system of the first embodiment;
FIG. 3 is a plan view schematically illustrating a display of the AR eye-glasses included in the user interface providing system of the first embodiment;
FIG. 4 is a view schematically illustrating a change of a display region in the display of the AR eye-glasses included in the user interface providing system of the first embodiment, and a motion of a head wearing the AR eye-glasses;
FIG. 5 is a view schematically illustrating a change of the display region in the display of the AR eye-glasses included in the user interface providing system of the first embodiment;
FIG. 6 is a flowchart showing a sequence of processing performed by an icon display unit of a smartphone included in the user interface providing system of the first embodiment;
FIG. 7 is a flowchart showing a sequence of processing performed by a processing executing unit of the smartphone included in the user interface providing system of the first embodiment;
FIG. 8 is a perspective view schematically illustrating a visual effect obtained from the user interface providing system of the first embodiment.
FIG. 9 is a block diagram illustrating a configuration for providing a smartphone controller user interface (UI) for the smartphone included in the user interface providing apparatus of the first embodiment;
FIG. 10 is a plan view schematically illustrating a controller screen displayed on a touch panel display of the smartphone included in the user interface providing apparatus of the first embodiment;
FIG. 11 is a view schematically illustrating a change of the display region in the display of the AR eye-glasses included in the user interface providing system of the first embodiment;
FIG. 12 is a plan view schematically illustrating an application list displaying screen displayed on the touch panel display of the smartphone included in the user interface providing system of the first embodiment;
FIG. 13 is a plan view schematically illustrating a gesture operation list displaying screen displayed on the touch panel display of the smartphone included in the user interface providing system of the first embodiment;
FIG. 14 is a block diagram illustrating hardware of the smartphone included in the user interface providing system of the first embodiment; and
FIG. 15 is a view schematically illustrating a change of a display region in the display of the AR eye-glasses included in the user interface providing system of a second embodiment, and a motion of a head wearing the AR eye-glasses.

### DETAILED DESCRIPTION OF THE INVENTION

Embodiments of the present disclosure will be described below with reference to the drawings. Note that, throughout the drawings, like reference signs denote identical or similar constituent features. Such features will not be repeatedly elaborated upon.

### 1. First Embodiment

### 1.1 User Interface Providing System

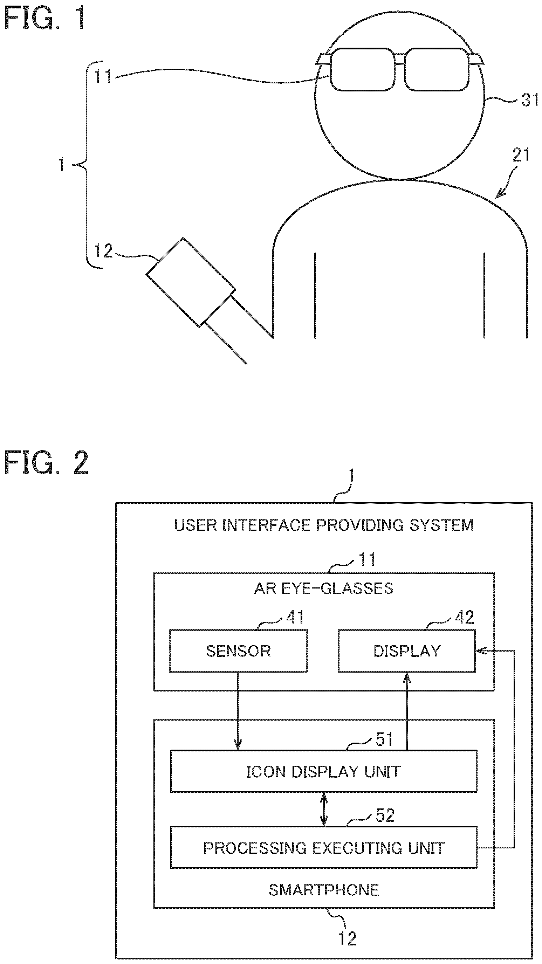

FIG. 1 is a front view schematically illustrating a user interface providing system of a first embodiment, and a user wearing augmented reality (AR) eye-glasses included in the user interface providing system.

A user interface providing system 1 of the first embodiment illustrated in FIG. 1 provides a user interface to a user 21 wearing AR eye-glasses 11 included in the user interface providing system 1. The provided user interface includes a user interface for selecting an application and starting the selected application.

As illustrated in FIG. 1, the user interface providing system 1 includes: the AR eye-glasses 11; and a smartphone 12.

The AR eye-glasses 11 are mounted on a head 31 of the user 21. The AR eye-glasses 11 display a video image superimposed on the real world.

The AR eye-glasses 11 may be replaced with cross-reality (XR) eye-glasses other than the AR eye-glasses 11. For example, the AR eye-glasses 11 may be replaced with virtual-reality (VR) eye-glasses, mixed-reality (MR) eye-glasses, or substitutional-reality (SR) eye-glasses. The AR eye-glasses 11 may be replaced with an eye-glasses head-mounted device other than the cross-reality (XR) eye-glasses. The AR eye-glasses 11 may also be replaced with a head-mounted device in a form other than a pair of eye-glasses. For example, the AR eye-glasses 11 may be replaced with a head-mounted device in the form of a pair of goggles, a cap, or a headset.

The smartphone 12 communicates with the AR eye-glasses 11 to receive and transmit information from and to the AR eye-glasses 11.

The smartphone 12 may be replaced with a mobile communications terminal other than the smartphone 12. For example, the smartphone 12 may be replaced with such a device as a feature phone or a tablet. The smartphone 12 may also be replaced with a terminal other than a mobile communications terminal. For example, the smartphone 12 may be replaced with such a device as a personal computer. A function of the smartphone 12 may be incorporated in the AR eye-glasses 11.

FIG. 2 is a block diagram illustrating the user interface providing system of the first embodiment.

As illustrated in FIG. 2, the AR eye-glasses 11 include: a sensor 41; and a display 42.

The sensor 41 detects a motion of the head 31. The sensor 41 can detect a motion having three degrees of freedom (i.e., 3DOF) or six degrees of freedom (6DOF). Hence, the detected motion of the head 31 includes a motion of a viewpoint moving in a horizontal direction. The sensor 41 includes such sensors as an angular velocity sensor, an acceleration sensor, and a geomagnetic sensor.

The display 42 is transparent to light, and disposed in front of the eyes of the head 31. Hence, the display 42 displays a video image superimposed on the real world viewed through the display 42.

The smartphone 12 functions as a user interface providing apparatus that provides a user interface to the user 21.

As illustrated in FIG. 2, the smartphone 12 includes: an icon display unit 51; and a processing executing unit 52. The AR eye-glasses 11 may function as the user interface providing apparatus. In this case, the AR eye-glasses 11 include the icon display unit 51 and the processing executing unit 52. The AR eye-glasses 11 and the smartphone 12 may cooperate with each other to function as the user interface providing apparatus. In this case, the AR eye-glasses 11 include some portions of the icon display unit 51 and the processing executing unit 52, and the smartphone 12 includes the rest of the portions of the icon display unit 51 and the processing executing unit 52.

The icon display unit 51 causes the display 42 to display a plurality of icons. Each of the plurality of displayed icons is associated with one of a plurality of applications. Each of the plurality of icons may be associated with one of a plurality of functions. The icon display unit 51 moves the plurality of displayed icons in accordance with the motion of the head 31 detected by the sensor 41.

When one of the displayed plurality of icons is kept displayed in a set region over a set time period, the processing executing unit 52 executes processing in accordance with the one icon.

Thus, the user 21 moves the head 31 to move an icon, associated with processing to be executed, into the set region, and then stops moving the head 31 and stares the icon. Hence, the user 21 can cause the user interface providing system 1 to execute the processing to be executed. Thanks to such a feature, the user 21 can carry out a hands-free operation on the AR eye-glasses 11 without giving an awkward impression to people around the user 21. Hence, the feature can reduce the chance that the AR eye-glasses 11 has limited applications even if the AR eye-glasses 11 are used outdoors.

### 1.2 Quick Menu Screen

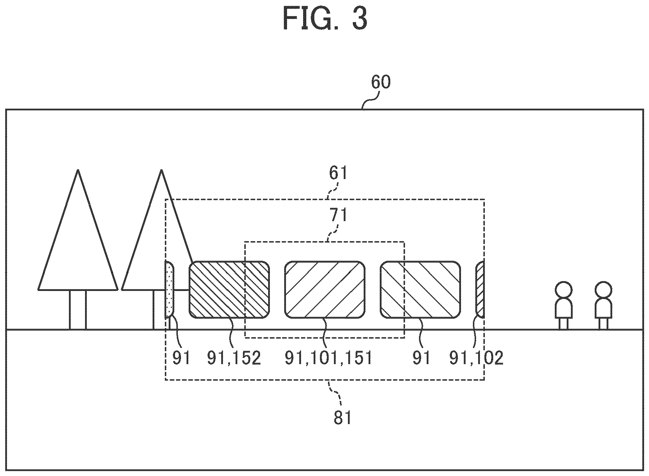

FIG. 3 is a plan view schematically illustrating the display of the AR eye-glasses included in the user interface providing system of the first embodiment.

As illustrated in FIG. 3, the display 42 has a display region 61 that displays a video image. The display region 61 is a portion of a lens unit 60 included in the AR eye-glasses 11 and transparent to light. Hence, outside the display region 61, there is a region transparent to light.

In the display region 61, a set region 71 is set. The set region 71 is desirably set in a center of the display region 61. Note that the broken lines illustrated in FIG. 3 to indicate the display region 61 and the set region 71 are not actually displayed on the display 42.

The user 21 can see the real world on the other side of the display region 61 through the display region 61. If the AR eye-glasses 11 include a camera, the camera may capture an image of the real world, and the display 42 may display the captured image of the real world in the display region 61, so that the user 21 can see the real world.

The icon display unit 51 displays a quick menu screen 81 in the display region 61.

The displayed quick menu screen 81 includes a plurality of icons 91. The plurality of icons 91 include five icons. The plurality of icons 91 may include either four or fewer icons or six or more icons. The plurality of icons 91 includes desirably three or more and five or fewer icons.

The plurality of icons 91 are arranged in a horizontal direction in a row.

Each of the plurality of icons 91 is associated with one of a plurality of applications.

### 1.3 Moving Icons

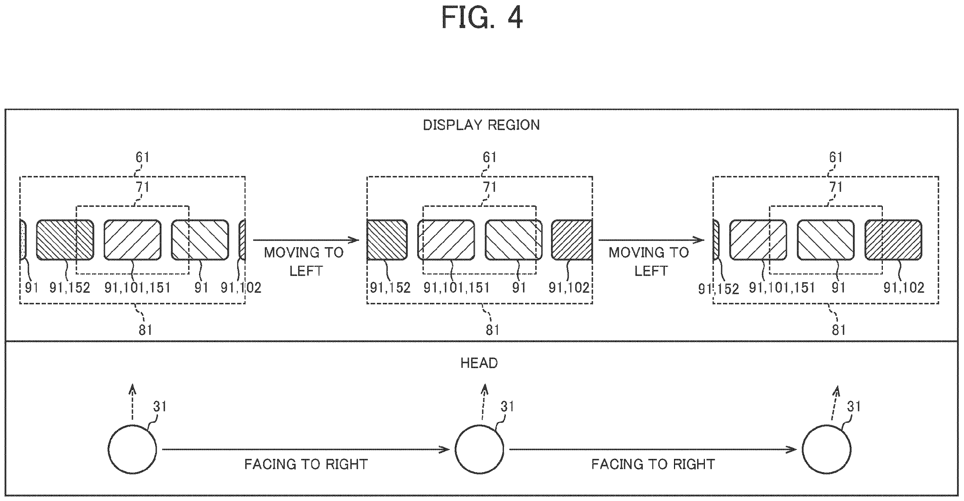

FIG. 4 is a view schematically illustrating a change of a display region in the display of the AR eye-glasses included in the user interface providing system of the first embodiment, and a motion of the head wearing the AR eye-glasses.

The icon display unit 51 moves the plurality of icons 91 in the horizontal direction in accordance with the motion of the head 31 moving the viewpoint in the horizontal direction. The icon display unit 51 moves the plurality of icons 91 in a direction opposite to the move of the viewpoint following the motion of the head 31. Hence, as illustrated in FIG. 4, when the user 21 faces to the right and the viewpoint moves to the right, the plurality of icons 91 move opposite to the right; that is, to the left. The plurality of icons 91 move a longer distance as the viewpoint moves a longer distance. Thus, the user 21 moves his or her viewpoint toward an icon associated with the processing to be executed, thereby successfully moving the icon into the set region 71.

The icon display unit 51 moves the plurality of icons 91 in the same direction for the same distance. Such a feature can reduce changes in relative positions of the plurality of icons 91.

Arrangement intervals between, and moving distances of, the plurality of icons 91 are desirably determined such that, if a field of view (FOV) is 45°, a required swing angle of the head 31 is set to approximately 10° to 15° to move an icon, displayed next to the icon displayed in the center of the set region 71, to the center of the set region 71. Hence, if the plurality of icons 91 include five icons and an icon 101 in the center is disposed in the center of the set region 71, the required swing angle of the head 31 can be set to approximately 25° to move an icon 102, disposed furthest to the right, to the center of the set region 71. Such a feature allows the user 21 to move the head 31 only slightly to the degree not to feel uncomfortable, in order to select any given icon among the plurality of icons 91.

The icon display unit 51 scrolls the display region 61 if a group of the plurality of icons 91 is horizontally wider than the display region 61 and the display region 61 cannot display the entire group.

### 1.4 Processing to Be Executed

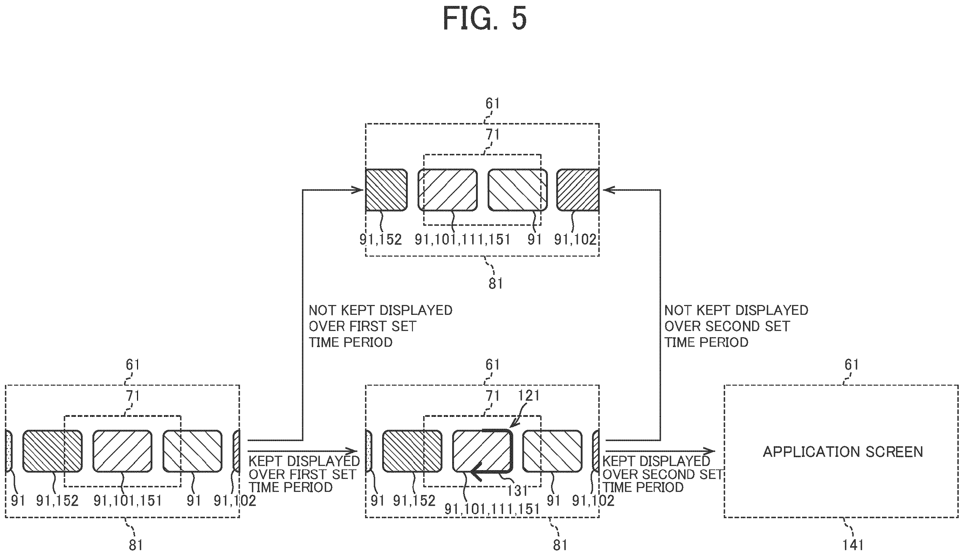

FIG. 5 is a view schematically illustrating a change of the display region in the display of the AR eye-glasses included in the user interface providing system of the first embodiment.

As illustrated in FIG. 5, if one icon 111 included in the plurality of icons 91 is kept displayed in the set region 71 over a first set time period, the processing executing unit 52 selects the one icon 111 and executes display processing that for displaying, in the display region 61, an effect 121 indicating that the one icon 111 has been selected. The first set time period is, for example, 0.5 seconds. The displayed effect 121 is, for example, an animation of a line 131 running along an outer periphery of the one icon 111.

The processing executing unit 52 determines that the one icon 111 is displayed in the set region 71 if the one icon 111 is entirely displayed in the set region 71. The processing executing unit 52 may determine that the one icon 111 is displayed in the set region 71 if the one icon 111 is mostly displayed in the set region 71. For example, if the one icon 111 is displayed 90% or more in the set region 71, the processing executing unit 52 may determine that the one icon 111 is displayed in the set region 71.

If the one icon 111 is shifted out of the display region 61 and the one icon 111 is not kept displayed in the display region 61 over the first set time period, the processing executing unit 52 neither selects the one icon 111 nor executes the display processing.

If the one icon 111 is kept displayed in the set region 71 over a second set time period longer than the first set time period, the processing executing unit 52 finishes executing the display processing and executes start processing for starting an application associated with the one icon 111. As a result, the display region 61 displays an application screen 141 of the started application. The second set time period is, for example, 1 second.

If the one icon 111 is kept displayed in the display region 61 over the first set time period, and after that, the one icon 111 is shifted out of the display region 61 and not kept displayed in the display region 61 over the second set time period, the processing executing unit 52 deselects the one icon 111 and does not execute the start processing.

If the one icon 111 is shifted out of the display region 61, and, after that, either the one icon 111 or another icon is kept displayed in the set region 71 over the first set time period, the processing executing unit 52 executes the display processing for displaying, in the display region 61, the effect 121 indicating that either the one icon 111 or the other icon has been selected. Furthermore, if either the one icon 111 or the other icon is kept displayed in the set region 71 over the second set time period, the processing executing unit 52 executes the start processing for starting an application associated with either the one icon 111 or the other icon.

### 1.5 Icons

As illustrated in FIGS. 3, 4 and 5, the plurality of icons 91 include: a previous execution icon 151 associated with an application executed previously; and a carrier icon 152 associated with a carrier application provided from a carrier that provides mobile communications services. If the application executed previously is not a carrier application, the carrier icon 152 is an icon different from the previous execution icon 151, and disposed next to the previous execution icon 151. For example, if the application executed previously is not a carrier application, the carrier icon 152 is disposed to the left of the previous execution icon 151. If the application executed previously is a carrier application, the carrier icon 152 is the same icon as the previous execution icon 151. The plurality of icons 91 may include: an icon associated with a home application; and an icon associated with a dedicated application such as an MR application.

When the quick menu screen 81 is displayed in the display region 61, the icon display unit 51 starts to display the plurality of icons 91 in the display region 61 while the previous execution icon 151 is displayed in the set region 71.

Hence, when executing again the application executed previously, the user 21 does not have to move the head 31 to move the plurality of icons 91. The user 21 just has to stare at an icon displayed in the set region 71 first.

This is because an application executed previously is likely to be executed again. For example, if the application executed previously is a translation application, the translation application is likely to be executed again. If the application executed previously is a downtown XR application, the downtown XR application is likely to be executed again.

### 1.6 Sequence of Processing Executed by Icon Display Unit

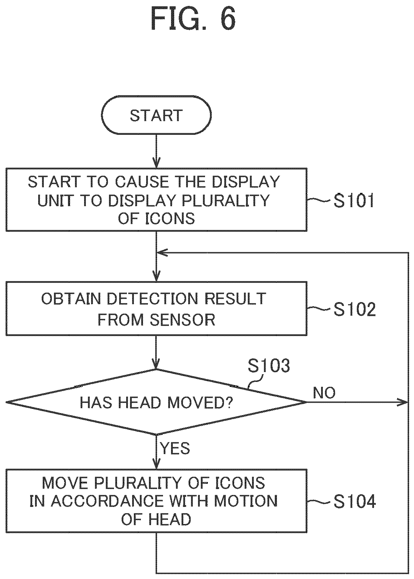

FIG. 6 is a flowchart showing a sequence of processing performed by the icon display unit of the smartphone included in the user interface providing system of the first embodiment.

The icon display unit 51 executes Steps S101 to S104 shown in FIG. 6.

At Step S101, the icon display unit 51 starts to cause the display 42 to display the plurality of icons 91.

At following Step S102, the icon display unit 51 obtains a detection result from the sensor 41.

At following Step S103, the icon display unit 51 determines whether the head 31 has moved, in accordance with the obtained detection result. If the determination indicates that the head 31 has moved, Step S104 is carried out. If the determination indicates that the head 31 has not moved, Step S102 is carried out again.

At Step S104, the icon display unit 51 moves the plurality of icons 91 in accordance with the motion of the head 31.

Between Step S102 and S104, the icon display unit 51 does not move the plurality of icons 91 if the head 31 has not moved. If the head 31 has moved, the icon display unit 51 moves the plurality of icons 91 in accordance with the motion of the head 31.

### 1.7 Sequence of Processing Executed by Processing Executing Unit

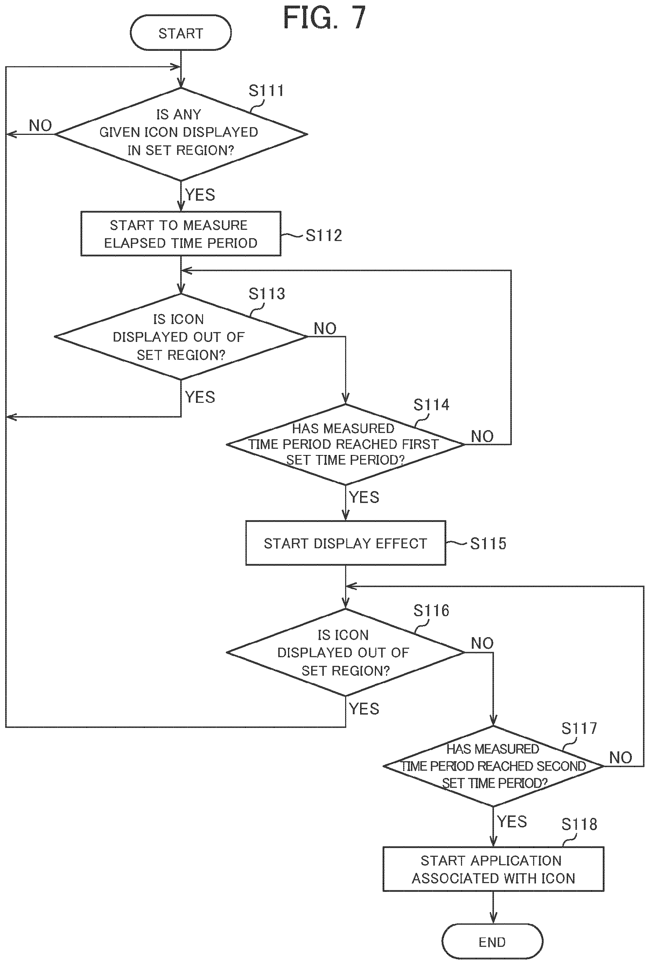

FIG. 7 is a flowchart showing a sequence of processing performed by the processing executing unit of the smartphone included in the user interface providing system of the first embodiment.

The processing executing unit 52 executes Steps S111 to S118 shown in FIG. 7.

At Step S111, the processing executing unit 52 determines whether any given icon included in the plurality of icons 91 is displayed in the set region 71. If the determination indicates that the icon is displayed in the set region 71, Step S112 is carried out. If the determination indicates that the icon is not displayed in the set region 71, Step S111 is carried out again.

At Step S112, the processing executing unit 52 starts to measure an elapsed time period.

When Steps S111 and S112 are carried out, if any given icon included in the plurality of icons 91 is not displayed in the set region 71, the processing executing unit 52 stands by until any given icon included in the plurality of icons 91 is displayed in the set region 71. Furthermore, as soon as any given icon included in the plurality of icons 91 is displayed in the set region 71, the processing executing unit 52 starts to measure a time period elapsed after the icon is displayed in the set region 71.

At Step S113, the processing executing unit 52 determines whether the icon is displayed out of the set region 71. If the determination indicates that the icon is displayed out of the set region 71, Step S111 is carried out again. If the determination indicates that the icon is not displayed in the set region 71, Step S114 is carried out.

At Step S114, the processing executing unit 52 determines whether the measured time period has reached the first set time period. It the determination indicates that the measured time period has reached the first set time period, Step S115 is carried out. It the determination indicates that the measured time period has not reached the first set time period, Step S113 is carried out again.

At Step S115, the processing executing unit 52 starts to display the effect 121.

Between Steps S113 to S115, if the icon is displayed out of the set region 71 before the time period, which has been elapsed after the icon is displayed in the set region 71, reaches the first set time period, the processing executing unit 52 does not start displaying the effect 121, and stands by until any given icon included in the plurality of icons 91 is displayed in the set region 71 again. Furthermore, as soon as the time period, which has been elapsed after the icon is displayed in the set region 71, reaches the first set time period, the processing executing unit 52 starts to display the effect 121.

At Step S116, the processing executing unit 52 determines whether the icon is displayed out of the set region 71. If the determination indicates that the icon is displayed out of the set region 71, Step S111 is carried out again. If the determination indicates that the icon is not displayed out of the set region 71, Step S117 is carried out.

At Step S117, the processing executing unit 52 determines whether the measured time period has reached the second set time period. It the determination indicates that the measured time period has reached the second set time period, Step S118 is carried out. It the determination indicates that the measured time period has not reached the second set time period, Step S116 is carried out again.

At Step S118, the processing executing unit 52 starts an application associated with the icon.

Between Steps S116 to S118, if the icon is displayed out of the set region 71 before the time period, which has been elapsed after the icon is displayed in the set region 71, reaches the second set time period, the processing executing unit 52 does not start the application associated with the icon, and stands by until any given icon included in the plurality of icons 91 is displayed in the set region 71 again. Furthermore, as soon as the time period, which has been elapsed after the icon is displayed in the set region 71, reaches the second set time period, the processing executing unit 52 starts the application associated with the icon.

### 1.8 Visual Effects

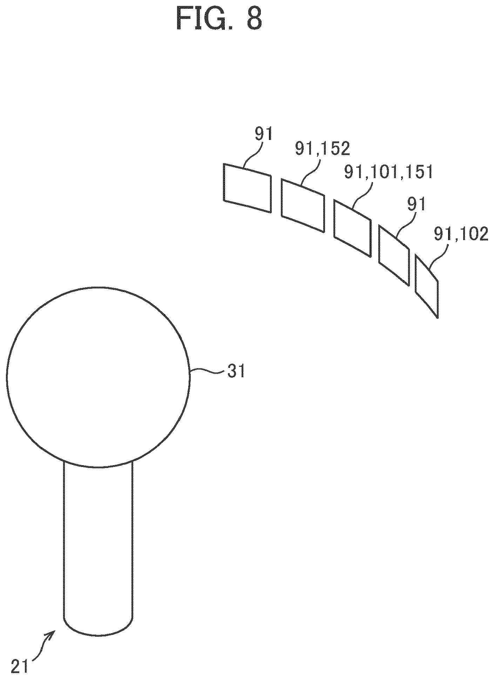

FIG. 8 is a perspective view schematically illustrating a visual effect obtained from the user interface providing system of the first embodiment.

As illustrated in FIG. 8, the user interface providing system 1 provides the user 21 with a visual effect showing that the plurality of icons 91 appear to be arranged in front of the user 21. Furthermore, the user interface providing system 1 provides the user 21 with a visual effect showing that the plurality of icons 91 appear to be arranged on a gentle arc-shaped plane.

The user 21 moves his or her viewpoint horizontally to place the viewpoint on one of the plurality of icons 91, thereby successfully allowing the user interface providing system 1 to select the one icon. Thus, the user interface providing system 1 provides a visual effect in which the plurality of icons 91 are stationary in space and the user 21 feels that he or she can move his or her viewpoint seamlessly when moving the head 31 in 3DOF or 6DOF.

### 1.9 Smartphone Controller User Interface

The user interface providing system 1 provides a user interface. Using the interface, the user 21, as described before, moves the head 31 to move an icon, associated with processing to be executed, into the set region 71, and then stops moving the head 31. Hence, the user 21 can cause the user interface providing system 1 to execute the processing to be executed. Such an interface is hereinafter referred to as a "center focus UI".

In order for the user 21 to be able to perform an operation that is difficult to perform using the center focus UI, the user interface providing system 1 may provide a user interface using the smartphone 12 as a controller. Such an interface is hereinafter referred to as a "smartphone controller UI". The smartphone controller UI is used for an operation on, for example, an existing application not for an operation carried out using the center focus UI.

When the user interface providing system 1 provides the center focus UI and the smartphone controller UI, the center focus UI is a main operating unit for operating the AR application and the smartphone controller UI is a substitute operating unit. The reason why the center focus UI is the main operating unit is because, in consideration for the use of the AR eye-glasses 11 outdoors, the AR application is desirably applicable to a hands-free operation.

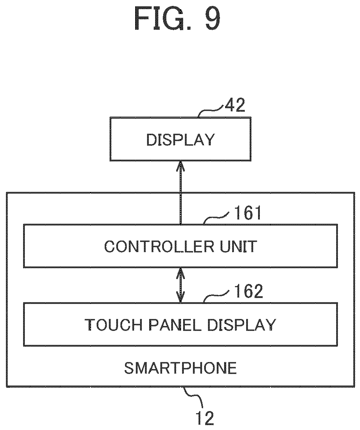

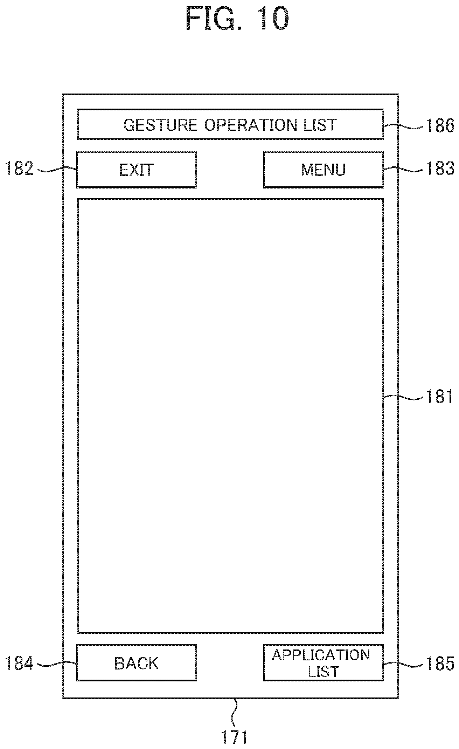

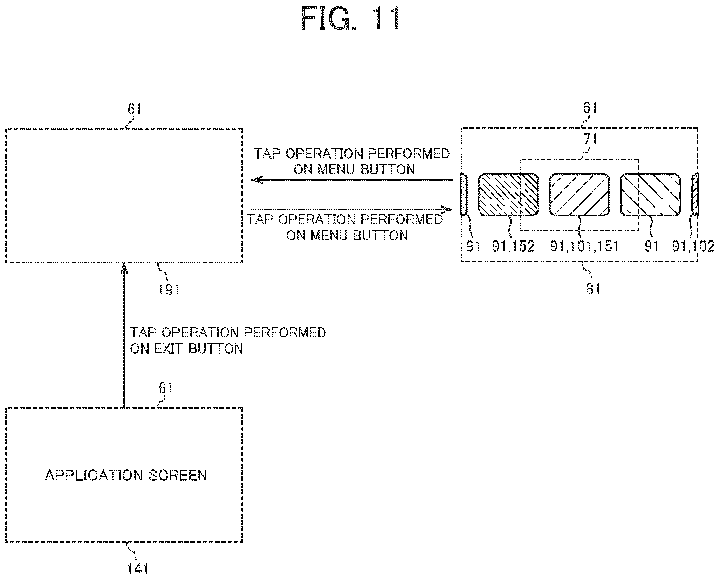

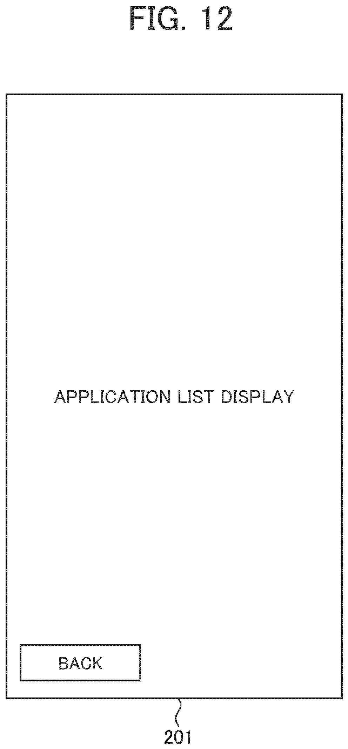

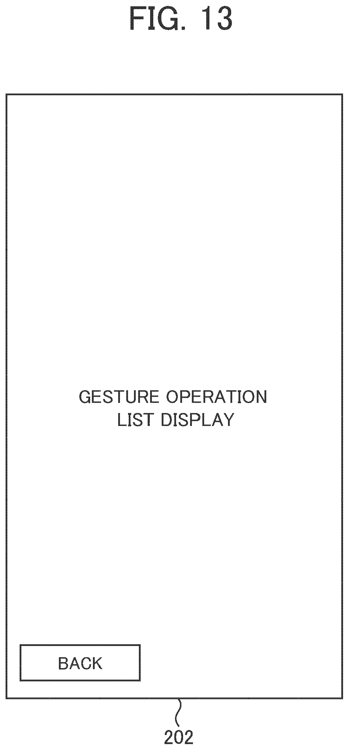

FIG. 9 is a block diagram illustrating a configuration for providing a smartphone controller UI for the smartphone included in the user interface providing apparatus of the first embodiment. FIG. 10 is a plan view schematically illustrating a controller screen displayed on a touch panel display of the smartphone included in the user interface providing apparatus of the first embodiment. FIG. 11 is a view schematically illustrating a change of the display region in the display of the AR eye-glasses included in the user interface providing system of the first embodiment. FIG. 12 is a plan view schematically illustrating an application list displaying screen displayed on the touch panel display of the smartphone included in the user interface providing system of the first embodiment. FIG. 13 is a plan view schematically illustrating a gesture operation list displaying screen displayed on the touch panel display of the smartphone included in the user interface providing system of the first embodiment.

As illustrated in FIG. 9, the smartphone 12 includes; a controller unit 161; and a touch panel display 162.

The controller unit 161 causes the touch panel display 162 to display a controller screen 171 illustrated in FIG. 10.

As illustrated in FIG. 10, the controller screen 171 includes: a touchpad operating region 181; an exit button 182; a MENU button 183; a BACK button 184; an application list button 185; and a gesture operation list button 186.

When a sliding operation is performed on the touchpad operating region 181, the controller unit 161 moves the plurality of icons 91, in a direction corresponding to a sliding direction of the sliding operation, by a distance corresponding to a sliding amount for the sliding operation. Hence, the sliding operation is an alternative operation to an operation to move the head 31 for moving the viewpoint.

When a double-tap operation is performed on the touchpad operating region 181, the controller unit 161 executes start processing to start an application associated with an icon displayed in the set region 71. Hence, the double-tap operation is an alternative operation to an operation to stop moving the head 31 for staring the icon.

When a tap operation is performed on the exit button 182 while an application is running, the controller unit 161 exits the running application and switches the display 42 to a non-display state 191 illustrated in FIG. 11.

When the tap operation is performed on the MENU button 183 while the quick menu screen 81 is not displayed, the controller unit 161 causes the display 42 to display the quick menu screen 81. Furthermore, when the tap operation is performed on the MENU button 183 while the quick menu screen 81 is displayed, the controller unit 161 causes the display 42 to stop displaying the quick menu screen 81 and to switch to the non-display state 191 illustrated in FIG. 11. In such cases as when the smartphone 12 is connected to the AR eye-glasses 11, when a power button included in the smartphone 12 is short-pressed, and when ejection of the smartphone 12 from a case is detected, the controller unit 161 may cause the display 42 to display the quick menu screen 81.

When the tap operation is performed on the BACK button 184 while an application is running, the controller unit 161 notifies the running application of a BACK event.

When the tap operation is performed on the application list button 185, the controller unit 161 causes the touch panel display 162 to display an application list displaying screen 201 showing an application list.

When the tap operation is performed on the gesture operation list button 186, the controller unit 161 causes the touch panel display 162 to display a gesture operation list displaying screen 202 showing a gesture operation list illustrated in FIG. 13. The gesture operation list shows gesture operations applicable to the user interface providing system 1.

A hardware key included in the smartphone 12 is used in principle for an operation not depending on the applications.

### 1.10 Smartphone Hardware

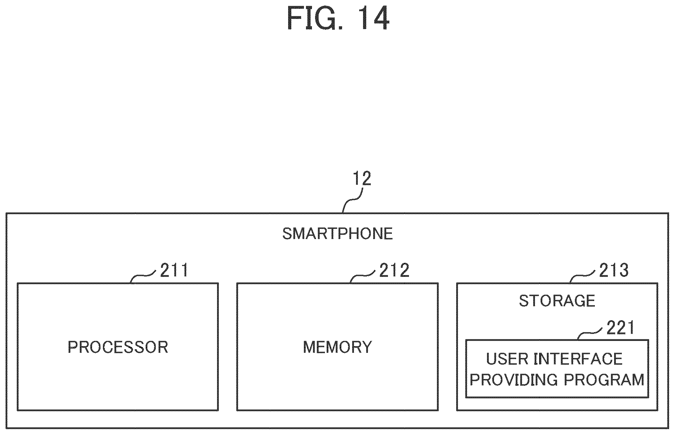

FIG. 14 is a block diagram illustrating hardware of the smartphone included in the user interface providing system of the first embodiment.

As illustrated in FIG. 14, the smartphone 12 includes: a processor 211; a memory 212; and a storage 213.

The processor 211 includes, for example, a central processing unit (CPU) and a graphics processing unit (GPU).

The memory 212 includes, for example, a random access memory (RAM) and a read-only memory (ROM).

The storage 213 includes, for example, a flash storage.

In the storage 213, a user interface providing program 221 is installed.

The processor 211 executes the user interface providing program 221 loaded on the memory, and causes a computer including the processor 211, the memory 212, and the storage 213 to operate as the icon display unit 51, the processing executing unit 52, and the controller unit 161.

Hence, the present disclosure is also directed to the user interface providing program 221 recorded on non-transitory computer-readable recording media such as the memory 212 and the storage 213. The user interface providing program 221 causes a computer including the processor 211, the memory 212, and the storage 213 to execute processing executed by the icon display unit 51, the processing executing unit 52, and the controller unit 161.

### 2. Second Embodiment

Described below will be how a second embodiment is different from the first embodiment. Otherwise, the same configurations as those employed in the first embodiment are also employed in the second embodiment.

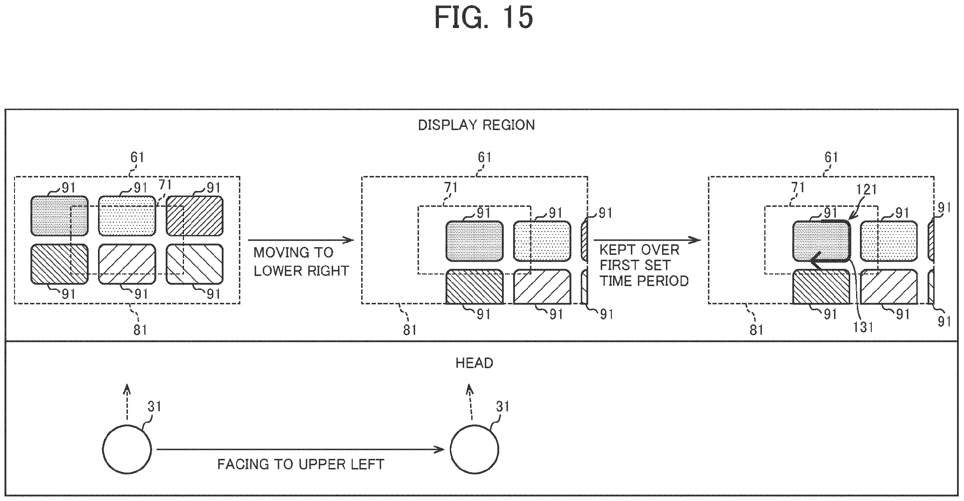

FIG. 15 is a view schematically illustrating a change of a display region in the display of the AR eye-glasses included in the user interface providing system of the second embodiment, and a motion of the head wearing the AR eye-glasses.

In the second embodiment, as illustrated in FIG. 15, the plurality of icons 91 include six icons arranged in a matrix in vertical and horizontal directions.

Furthermore, the icon display unit 51 moves the plurality of icons 91 in the vertical and horizontal directions in accordance with the motion of the head 31 moving the viewpoint in the vertical and horizontal directions. Hence, as illustrated in FIG. 15, when the user 21 faces to the upper left and the viewpoint moves to the upper left, the plurality of icons 91 move opposite to the upper left; that is, to the lower right.

Such a feature can reduce the horizontal width of a group of the plurality of icons 91. The feature can save the necessity of scrolling and present more of the plurality of icons 91 at sight.

While there have been described what are at present considered to be certain embodiments of the invention, it will be understood that various modifications may be made thereto, and it is intended that the appended claims cover all such modifications as fall within the true spirit and scope of the invention.

## Claims

1. A user interface providing apparatus, comprising:
an icon display unit configured to cause a display, included in a head-mounted device, to display an icon, and to move the icon in accordance with a motion of a head detected by a sensor included in the head-mounted device; and
a processing executing unit configured to execute processing in accordance with the icon when the icon is kept displayed in a set region over a set time period.

2. The user interface providing apparatus according to claim 1,
wherein the processing is display processing for causing the display to display an effect indicating that the icon has been selected.

3. The user interface providing apparatus according to claim 2,
wherein the effect is an animation of a line running along an outer periphery of the icon.

4. The user interface providing apparatus according to claim 2,
wherein the set time period is a first set time period, and
if the icon is kept displayed in the set region over a second set time period longer than the first set time period, the processing executing unit executes start processing for starting an application associated with the icon.

5. The user interface providing apparatus according to claim 1,
wherein the processing is start processing for starting an application associated with the icon.

6. The user interface providing apparatus according to claim 1,
wherein the display has a display region that displays a video image, and
the set region is set in a center of the display region.

7. The user interface providing apparatus according to claim 1,
wherein the icon display unit causes the display to display a plurality of icons including the icon, and moves the plurality of icons in a same direction for a same distance in accordance with the motion.

8. The user interface providing apparatus according to claim 7,
wherein the plurality of icons is arranged in a horizontal direction in a row, and
the motion involves moving a viewpoint in the horizontal direction.

9. The user interface providing apparatus according to claim 7,
wherein the plurality of icons is arranged in a matrix in vertical and horizontal directions, and
the motion is a motion in the vertical and horizontal directions.

10. The user interface providing apparatus according to claim 7,
wherein the plurality of icons includes a previous execution icon associated with an application executed previously, and
the icon display unit starts to display the plurality of icons while the previous execution icon is displayed in the set region.

11. The user interface providing apparatus according to claim 1,
wherein icon display unit moves the icon in a direction opposite to a move of a viewpoint following the motion.

12. A user interface providing system, comprising:
the user interface providing apparatus according to any one of claims 1 to 11; and
the head-mounted device.

13. A method for providing a user interface, comprising:
causing a display, included in a head-mounted device, to display an icon;
moving the icon in accordance with a motion of a head detected by a sensor included in the head-mounted device; and
executing processing in accordance with the icon when the icon is kept displayed in a set region over a set time period.

14. A user interface providing program causing a computer to execute:
moving a display, included in a head-mounted device, to display an icon;
moving the icon in accordance with a motion of a head detected by a sensor included in the head-mounted device; and
processing in accordance with the icon when the icon is kept displayed in a set region over a set time period.
